# EUROPÄISCHE PATENTANMELDUNG

(11) **EP 1 016 945 A2**
(43) Veröffentlichungstag der Anmeldung: **05.07.2000**
(21) Anmeldenummer: 99118042.3
(22) Anmeldetag: 22.09.1999
(51) Int. Cl.: G05B 19/05

(54) **Vorrichtung zur programmierbaren Messsignalvorverarbeitung für eine speicherprogrammierte Steuerung (SPS)**

(30) Priorität: 04.12.1998 DE 19856090
(71) Anmelder: PCS Process Control Systems GmbH Gesellschaft für Steuerungs- und Automationstechnik, 79115 Freiburg (DE)
(72) Erfinder: Pollak-Diener, Gerhard, Dr., 82110 Germering (DE)
(74) Vertreter: Reinhard - Skuhra - Weise & Partner

(57) **Zusammenfassung**

Eine Vorrichtung zur Meßsignalvorverarbeitung für eine speicherprogrammierte Steuerung (SPS) weist auf: mindestens einen Analog/Digital-Wandler, der an einen Meßverstärker eines Meßwertaufnehmers mit einem vorbestimmten Meßwertbereich und einer vorbestimmten Empfindlichkeit anschließbar ist und das erfaßte analoge Meßsignal in ein digitales Meßsignal umwandelt, einen Festwertspeicher, in dem ein Referenzmeßwert U_{ref}, welcher innerhalb des vorbestimmten Meßwertbereichs des Meßwertaufnehmers liegt, und ein Dehnungsfaktor K digital abspeicherbar sind, einen Mikrocomputer, der ein digitales Differenzsignal zwischen dem digitalen Meßsignal und dem abgespeicherten Referenzmeßwert bildet und dieses digitale Differenzsignal mit dem abgespeicherten Dehnungsfaktor K multipliziert und als digitales Ausgangsmeßsignal an einen Analog/Digital-Wandler abgibt, der das digitale Ausgangsmeßsignal in ein analoges Ausgangsmeßsignal umwandelt. Das analoge Ausgangsmeßsignal weist eine höhere Empfindlichkeit auf als das von dem Meßwertaufnehmer abgegebene Meßsignal und ist durch die speicherprogrammierbare Steuerung (SPS) weiterverarbeitbar.

## Beschreibung

Die Erfindung betrifft eine Vorrichtung zur programmierbaren Meßsignalvorverarbeitung für eine speicherprogrammierte Steuerung und ein Verfahren zur Meßsignalvorverarbeitung, insbesondere zur Vorverarbeitung eines Temperaturmeßsignals.

Es ist allgemein bekannt, durch Sensoren erfaßte Meßwerte in Form analoger Standardsignale zu übertragen. Zur Messung der Temperatur sind die verschiedensten Meßwertaufnehmer bzw. Sensoren bekannt, wie Widerstands-Temperaturfühler oder Widerstands-Meßbrücken. Für Spezialanwendungen, insbesondere in der Halbleiterherstellung, sind Temperaturmessungen mit einer Auflösung von 0,0001°C und einer Genauigkeit von ± 0,01°C erforderlich. Durch die ständig abnehmende Größe der in der Produktion herzustellenden Strukturen, die bis weit in den Sub-Mikrometerbereich hineinreichen, steigen die Anforderungen an die Empfindlichkeit von Sensoren, insbesondere von Temperatursensoren, ständig an. Die begrenzte Empfindlichkeit herkömmlicher Sensoren und damit der Auflösung der nachfolgenden Analog/Digital-Wandlung erweist sich dabei oft als Problem für die exakte Regelung von Produktionsvorgängen. Speicherprogrammierbare Steuerungen haben häufig nur einen 12-Bit Analog/Digitalwandler und damit eine Auflösung von 2mV.

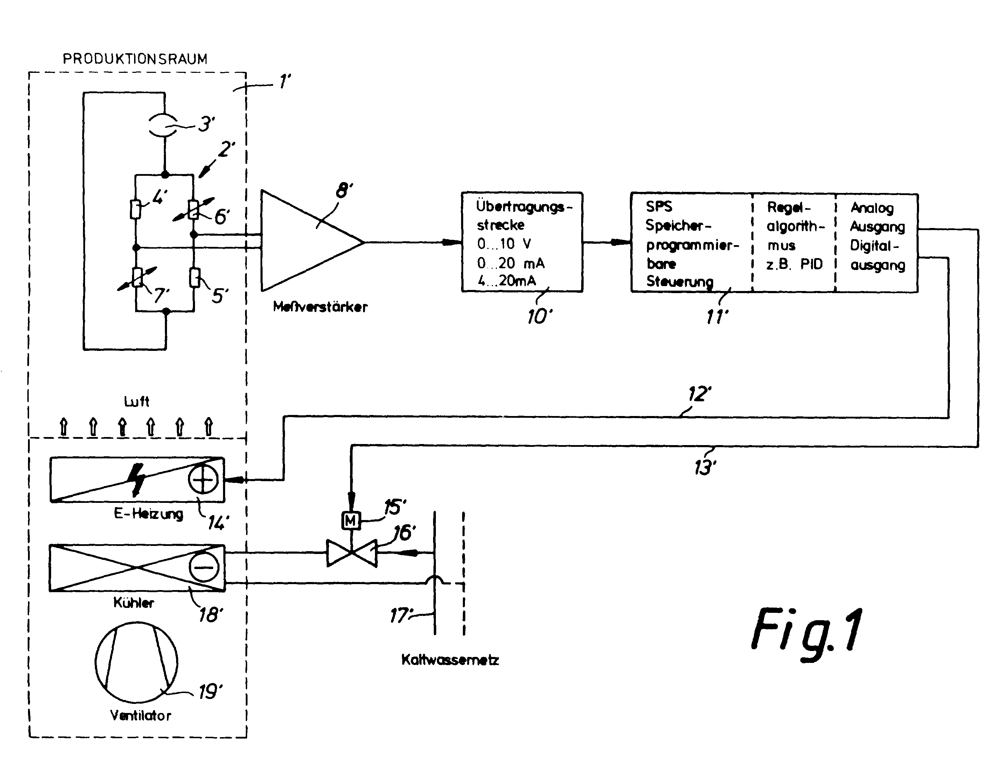

Fig. 1 zeigt eine Regelstrecke für einen Produktionsvorgang nach dem Stand der Technik ohne die erfindungsgemäße Signalvorverarbeitungsschaltung. In dem Produktionsraum 1' befindet sich eine herkömmliche Brückenschaltung 2' zur Messung von Temperaturänderungen in dem Produktionsraum 1', die ein analoges Meßsignal über eine Übertragungsstrecke 10' an eine speicherprogrammierbare Steuerung 11' abgibt. In der speicherprogrammierbaren Steuerung 11' wird ein Regelalgorithmus, beispielsweise ein PID-Regelalgorithmus durchgeführt. Die speicherprogrammierbare Steuerung 11' gibt über analoge oder digitale Steuerausgänge Steuersignale an Stellglieder, beispielsweise an den Motor 15' eines Ventils oder an eine Heizung 14' ab. Durch diese Stellglieder wird die Temperatur in dem Produktionsraum 1' entsprechend den Steuersignalen geregelt. Bei bestimmten speziellen Produktionsanwendungen, insbesondere auf dem Gebiet der Halbleitertechnik ist es erforderlich, daß Temperaturänderungen in einem Auflösungsbereich von 0,0001°C z.B. bei 20°C erfaßbar sind. Bei der in Fig. 1 gezeigten herkömmlichen Brückenschaltung 2' treten bei einer Temperaturänderung von 0,0001°C Diagonalspannungen von ca. 100 nV auf, die mittels eines Verstärkers 8' um den Faktor 1000 verstärkt werden müssen, bevor sie dem A/D-Wandler der SPS-speicherprogrammierbaren Steuerung 11' zugeführt werden können. Dieser A/D-Wandler weist eine Auflösung von ca. 100 µV auf.

Zur Erlangung eines CE-Prüfzeichens muß die Meßanordnung eine hohe Störfestigkeit gegenüber hochfrequenten Störfeldern haben. Die Bestrahlungsfeldstärken liegen dabei bei etwa 10 V/m und sind somit um 8 Größenordnungen höher als das übertragene Meßsignal. Zur Erreichung eines derart hohen Signal-Stör-Abstandes wird die gesamte Eingangsschaltung einschließlich des Verstärkers 8' hochfrequenzdicht abgeschirmt. Erst bei einer Verstärkung etwa um den Faktor 1000 ergibt sich ein ausreichender Signal-Störabstand, der eine Signalweiterverarbeitung ohne aufwendige Abschirmmaßnahmen ermöglicht. Die notwendige hohe Vorverstärkung des Vorverstärkers 8' bedingt bei der herkömmlichen Signalverarbeitung, daß der Nullpunkt des Meßwertaufnehmers bzw. der Meßbrücke 2' durch geeignete Wahl der Referenzwiderstände 4', 5' so festgelegt wird, daß er in der Nähe des zu messenden Temperaturwertes liegt. Nur in diesem Falle kann mit der erforderlichen hohen Vorverstärkung des Vorverstärkers 8' gearbeitet werden, da es nicht zu einer Überschreitung des Aussteuerbereiches des Vorverstärkers kommt. Befindet sich der Nullpunkt des Meßwertaufnehmers bzw. Sensors 2' nicht in der Nähe des zu messenden Temperaturwertes in dem Produktionsraum 1', führt die für die Erreichung des hohen Signal-Stör-Abstandes notwendige hohe Vorverstärkung dazu, daß der Aussteuerbereich des Vorverstärkers überschritten und das Meßsignal begrenzt wird.

Es ist daher bei dieser herkömmlichen Meßanordnung erforderlich, daß der Meßwertaufnehmer kundenspezifisch bzw. entsprechend den Anforderungen des Produktionsvorganges kalibriert werden muß. Eine Kalibrierung auf eine geforderte Meßgenauigkeit von beispielsweise 0,01°C ist allerdings nur in einem Meßlabor und nicht am Produktionsort möglich.

Es ist daher die Aufgabe der vorliegenden Erfindung, eine programmierbare, dezentrale Meßsignalvorverarbeitungsschaltung zu schaffen, die durch Anordnung in direkter Umgebung des Sensors keine EMV-Probleme bereitet.

Diese Aufgabe wird erfindungsgemäß durch eine Vorrichtung mit den im Patentanspruch 1 angegebenen Merkmalen sowie durch ein Verfahren mit den im Patentanspruch 7 angegebenen Merkmalen gelöst.

Durch die erfindungsgemäße Meßsignalvorverarbeitungsschaltung kann ein Meßverstärker mit kleinerer Verstärkung verwendet werden. Dies führt zu einem größeren Meßbereich, aus dem nachfolgend durch die programmierbare Meßsignalvorverarbeitungsschaltung mit Hilfe einer hochauflösenden Analog/Digitalumwandlung der für die Anwendung erforderliche Meßbereich herausgerechnet werden kann. Dies hat den Vorteil, daß die Parametrisierung der gesamten Meßeinrichtung vor Ort vorgenommen werden kann und eine kundenspezifische Kalibrierung bzw. ein Brückenabgleich entfällt.

Weitere vorteilhafte Ausgestaltungen sind in den Unteransprüchen angegeben.

Die erfindungsgemäße Meßsignalvorverarbeitungsschaltung wird im folgenden unter Bezugnahme auf die beigefügten Figuren erläutert.

Es zeigen:
- Fig. 1: eine herkömmliche Meßanordnung ohne die erfindungsgemäße Signalvorverarbeitungsschaltung;
- Fig. 2: die in Fig. 1 dargestellte Meßanordnung mit der erfindungsgemäßen Signalvorverarbeitungsschaltung;
- Fig. 3: den Aufbau der erfindungsgemäßen Signalvorverarbeitungsschaltung;
- Fig. 4: ein Flußdiagramm der Meßwertsignalvorverarbeitung durch die erfindungsgemäße Signalvorverarbeitungsschaltung;
- Fig. 5: ein Flußdiagramm der Programmierung der erfindungsgemäßen Signalvorverarbeitungsschaltung.

Fig. 1 zeigt eine herkömmliche Meßanordnung zur Messung der Temperatur in einem Produktionsraum nach dem Stand der Technik.

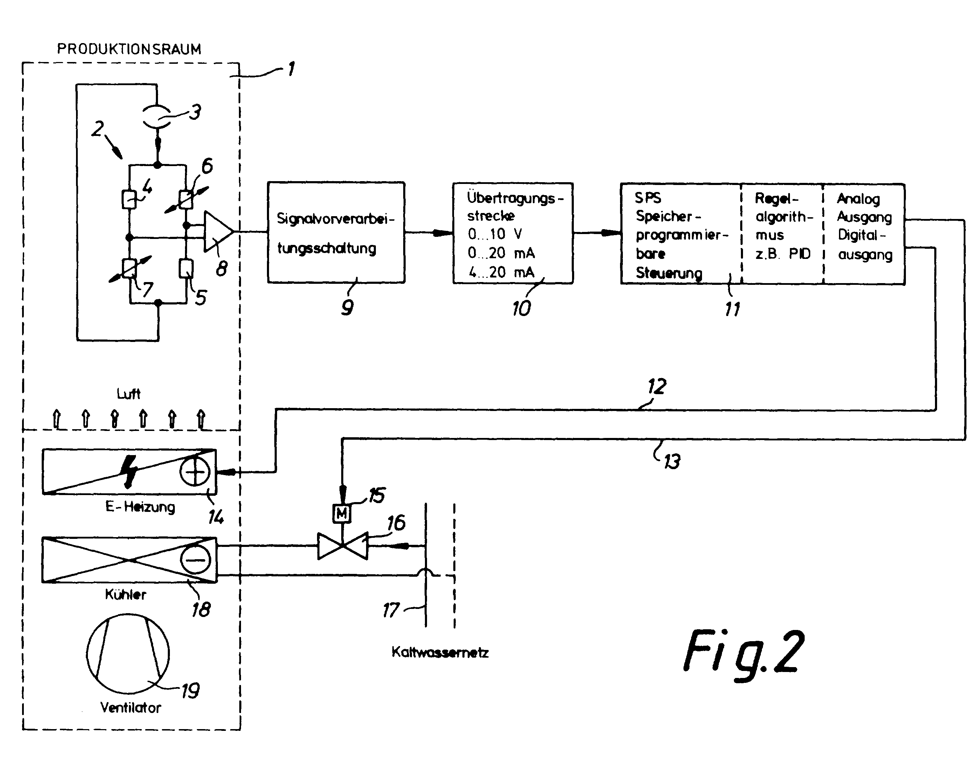

Gleiche Bauelemente sind in der Fig. 1 und in der Fig. 2 mit gleichen Bezugszeichen versehen.

Fig. 2 zeigt eine Meßanordnung zur Regelung der Temperatur in einem Produktionsraum, bei der die erfindungsgemäße Signalvorverarbeitungsschaltung vorgesehen ist.

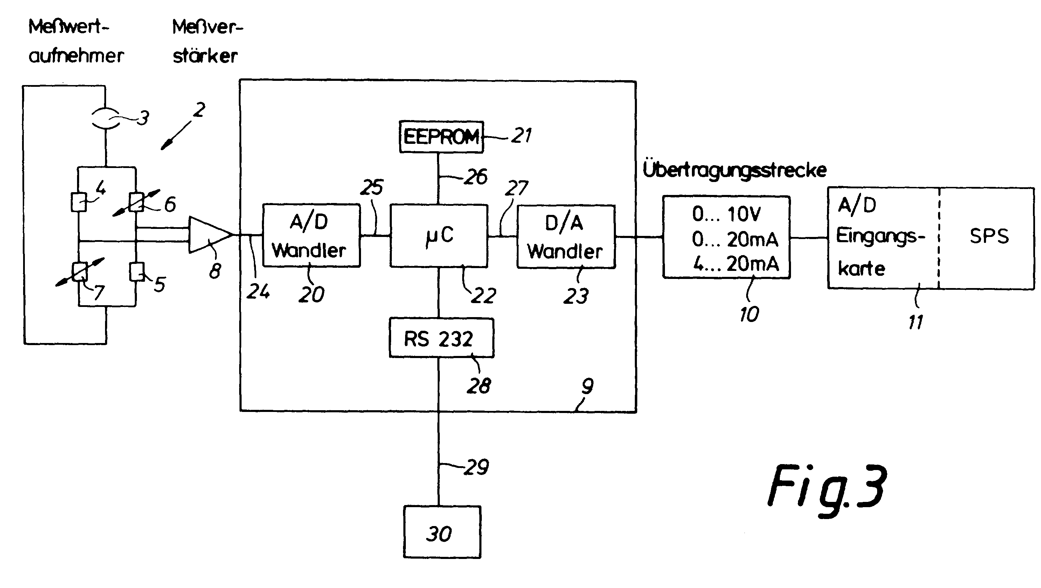

In dem Produktionsraum 1 befindet sich ein Meßwertaufnehmer 2, beispielsweise eine Meßbrückenschaltung. Die Meßbrückenschaltung 2 weist eine Konstantstromquelle 3 auf, die einen sich verzweigenden Strom liefert. Die Meßbrücke 2 weist Referenzwiderstände 4, 5 sowie zwei Meßwiderstände 6, 7 auf. Bei einer Temperaturänderung tritt eine zur Temperaturänderung proportionale Diagonalspannung auf, die an einem Meßverstärker 8 anliegt. Bei einer Temperaturänderung von beispielsweise 0,0001°C tritt beispielsweise eine Diagonalspannung von etwa 100 nV auf. Der Meßverstärker 8 verstärkt die Diagonalspannung um einen vorbestimmten Faktor und gibt ein verstärktes Meßsignal an die Signalvorverarbeitungsschaltung 9 ab. Die Signalvorverarbeitungsschaltung 9, deren Aufbau im einzelnen in Fig. 3 gezeigt ist, führt eine Meßsignalvorverarbeitung durch und gibt das vorverarbeitete Meßsignal über eine Übertragungsstrecke 10 an eine speicherprogrammierbare SPS-Steuerung 11 ab. Die SPS-Steuerung 11 führt einen Regelalgorithmus aus und gibt über ihre analogen oder digitalen Steuerausgänge Steuersignale mittels Steuerleitungen 12, 13 an Stellglieder 14, 15 ab. Bei dem in Fig. 2 dargestellten Stellglied 14 handelt es sich um eine Elektroheizung zur Erhitzung der Luft in dem Produktionsraum 1. Bei dem in Fig. 2 dargestellten Stellglied 15 handelt es sich um einen Stellmotor für ein Regelventil 16. Bei Öffnung des Regelventils 16 strömt kaltes Wasser aus einem Kaltwassernetz 17 zu einem Kühler 18 und kühlt die Luft in dem Produktionsraum 1.

Die durch die Elektroheizung 14 erhitzte bzw. durch den Kühler 18 abgekühlte Luft wird mittels eines Ventilators 19 in dem Produktionsraum 1 verteilt. Fig. 2 zeigt eine typische Temperaturregelung, bei der die erfindungsgemäße Signalvorverarbeitungsschaltung 9 verwendet wird.

Die Signalvorverarbeitungsschaltung 9 kann jedoch bei einer beliebigen Regelung eines beliebigen physikalischen Parameters verwendet werden. Bei dem Meßwertaufnehmer 2 kann es sich um einen beliebigen Sensor handeln, der einen physikalischen Parameter mißt.

Fig. 3 zeigt die Signalvorverarbeitungsschaltung 9 in ihrem Aufbau. Die Signalvorverarbeitungsschaltung 9 weist einen Analog/Digital-Wandler 20, einen Festwertspeicher 21, einen Mikroprozessor 22 und einen Digital/Analog-Wandler 23 auf. Der Meßverstärker 8 ist über eine Eingangsleitung 24 mit dem Analog/Digital-Wandler 20 der Signalvorverarbeitungsschaltung 9 verbunden. Der Analog/Digital-Wandler 20 wandelt das von dem Meßverstärker 8 empfangene analoge Meßsignal in ein digitales Meßsignal um und gibt es über eine Leitung 25 an den Mikroprozessor 22 zur Datenverarbeitung ab. Der Mikroprozessor 22 ist über eine Leitung 26 mit einem Festwertspeicher 21 verbunden. Der Festwertspeicher 21 ist vorzugsweise ein elektrisch löschbarer, programmierbarer Festwertspeicher bzw. EEPROM. Der Mikroprozessor 22 ist ausgangsseitig über eine Leitung 27 mit dem Digital/Analog-Wandler 23 verbunden. Der Digital/Analog-Wandler 23 wandelt die von dem Mikroprozessor 22 ausgegebenen, verarbeiteten digitalen Signalwerte in ein Analogsignal um, das über die Übertragungsstrecke 10 an die SPS-Steuerung 11 abgegeben wird, die ihrerseits eingangsseitig einen nicht weiterbezeichneten Analog/Digital-Wandler aufweist.

Bei der Übertragungsstrecke 10 handelt es sich um eine genormte Standard-Übertragungsstrecke. Der Analog/Digital-Wandler 20 und der Digital/Analog-Wandler 23 ermöglichen es, daß die Signalvorverarbeitungsschaltung 9 bei jeder beliebigen Meßanordnung verwendbar ist und direkt an eine speicherprogrammierbare Steuerung 11 angeschlossen werden kann. Die Signalvorverarbeitungsschaltung 9 ist somit kompatibel mit der Standardübertragungsstrecke für SPS-speicherprogrammierbare Steuerungssysteme. Die Signalvorverarbeitungsschaltung 9 weist eine Schnittstelle 28 auf, die über eine Leitung 29 an eine Eingabevorrichtung 30 anschließbar ist. Die Schnittstelle 28 ist beispielsweise eine serielle Schnittstelle, vorzugsweise eine RS 232-Schnittstelle.

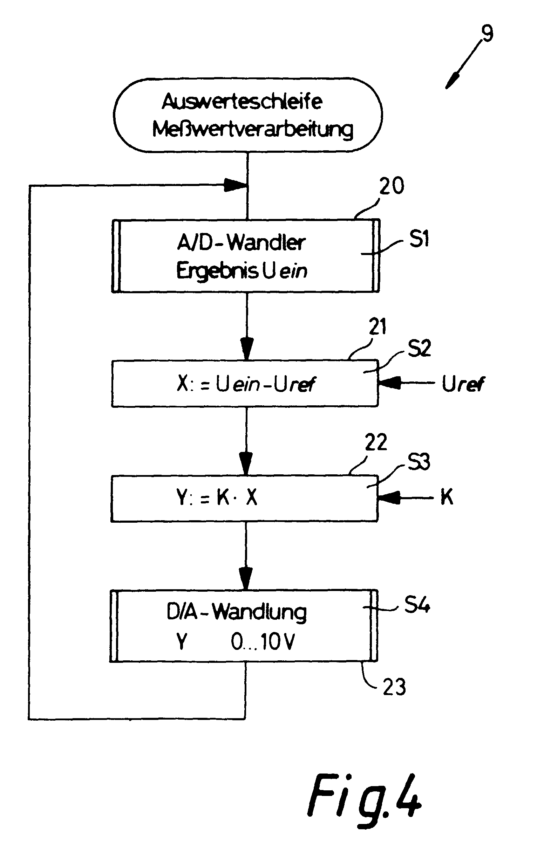

Fig. 4 zeigt ein Flußdiagramm zur Erklärung der Funktionsweise der erfindungsgemäßen Signalvorverarbeitungsschaltung 9. Die dargestellte "Auswerteschleife Meßwertverarbeitung" läuft innerhalb der Signalvorverarbeitungsschaltung 9 ständig ab. Das durch den Meßwertaufnehmer 2 erfaßte und durch den Meßverstärker 8 verstärkte analoge Eingangsmeßsignal wird durch den Analog/Digital-Wandler 20 in Schritt S1 zu einem digitalen Eingangsmeßsignal umgewandelt. Das umgewandelte digitale Meßsignal Uₑᵢₙ wird durch den Mikroprozessor 22 in Schritt S2 um einen in dem Festwertspeicher 21 abgespeicherten digitalen Referenzmeßwert U_{ref} vermindert. In Schritt S3 wird der digitale Differenzwert X mit einem ebenfalls in dem Festwertspeicher 21 abgespeicherten Dehnungsfaktor K mittels des Mikroprozessors 22 zu einem digitalen Ausgangsmeßsignal multipliziert. Das berechnete digitale Ausgangsmeßsignal wird in Schritt S4 durch den Mikroprozessor 22 an den Digital/Analog-Wandler 23 abgegeben und dort in ein analoges Ausgangsmeßsignal umgewandelt.

Der Referenzmeßwert U_{ref} und der Dehnungsfaktor K sind in dem elektrisch löschbaren programmierbaren Festwertspeicher EEPROM 21 abgespeichert und können durch einen Anwender mittels der Eingabevorrichtung 30 über die Schnittstelle 28 überschrieben werden. Der Anwender hat somit die Möglichkeit, den Referenzmeßwert U_{ref} und den Dehnungsfaktor K entsprechend seinen Anforderungen in die Signalvorverarbeitungsschaltung 9 einzuprogrammieren.

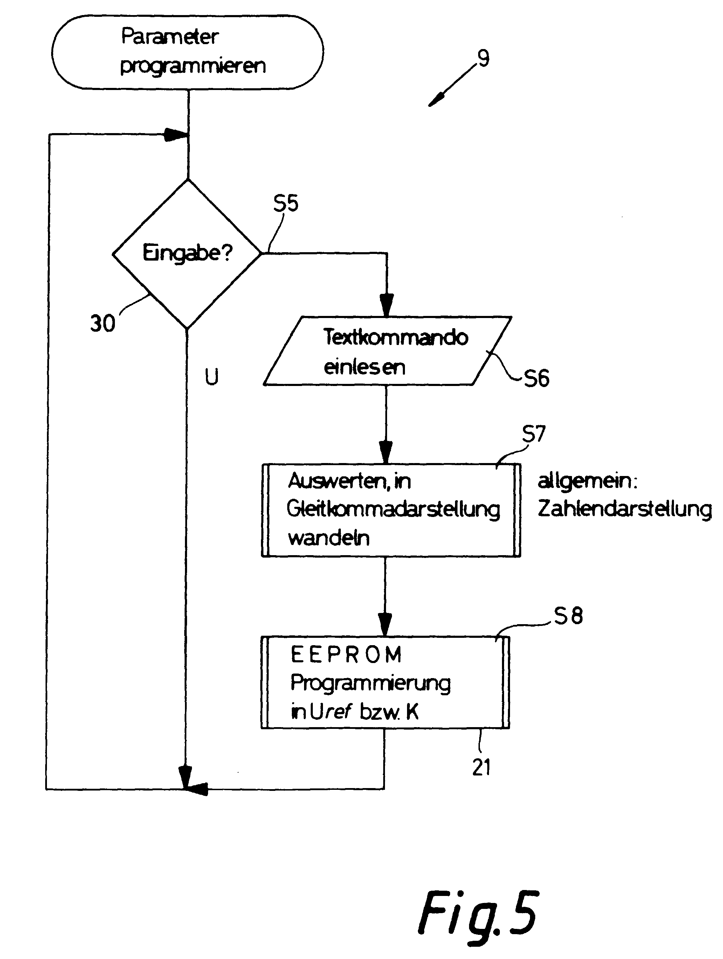

Fig. 5 zeigt ein Flußdiagramm, in welchem die Programmierung der Signalvorverarbeitungsschaltung 9 gezeigt ist. Bemerkt die Signalvorverarbeitungsschaltung 9 in Schritt S5, daß über die Eingabevorrichtung 30 eine Eingabe durch den Anwender erfolgt, liest sie im Schritt S6 das eingegebene Textkommando ein und wertet dies im Schritt S7 aus. Die eingegebenen Werte werden in Schritt S7 in eine beliebige Zahlendarstellung, vorzugsweise in eine Gleitkommadarstellung umgewandelt und im Schritt S8 in dem Festwertspeicher 21 abgespeichert.

Die Programmierung der Signalvorverarbeitungsschaltung 9 kann durch den Anwender am Produktionsort entsprechend seinen Anforderungen erfolgen, ohne daß eine Nachkalibrierung notwendig ist. Das von der Signalvorverarbeitungsschaltung 9 abgegebene Ausgangsmeßsignal, welches über die Standardübertragungsstrecke 10 zu der SPS-Steuerung gelangt, hat eine hohe Empfindlichkeit und ermöglicht eine deutlich höhere Auflösung durch die SPS-Steuerung, als das durch die Signalvorverarbeitungsschaltung 9 eingangsseitig vom Meßverstärker 8 empfangene Meßsignal.

Durch geeignete Eingabe des Referenzmeßwertes U_{ref} und des Dehnungsfaktors K ist es dem Anwender möglich, aus dem Gesamtmeßbereich des Sensors, beispielsweise 0 bis 100°C bei einem Temperaturmeßwertaufnehmer, einen für den Produktionsvorgang entscheidenden Meßbereich von 20°C±0,5°C auszuwählen und die Auflösung der SPS in diesem Bereich auf 0,0001°C zu verhundertfachen.

Aus dem Gesamtmeßbereich sind beliebige Untermeßbereiche bei erhöhter Empfindlichkeit durch geeignete Programmierung der Signalvorverarbeitungsschaltung 9 einstellbar, beispielsweise ein Meßbereich von 10°C bis 20°C mit einer Empfindlichkeit von 1V/°C und einer Auflösung von 0,001°C.

Die erfindungsgemäße Signalvorverarbeitungsschaltung 9 ermöglicht es dem Anwender, beliebige Sensoren 2 in einfacher Weise flexibel zu kalibrieren und die Empfindlichkeit in bestimmten gewünschten Meßbereichen deutlich zur Weiterverarbeitung in einer SPS-Steuerung zu steigern.

Die Stromversorgung der Signalvorverarbeitungsschaltung erfolgt durch eine nicht dargestellte Stromversorgungseinheit oder über die Übertragungsstrecke 10.

Die erfindungsgemäße Signalvorverarbeitungsschaltung 9 eignet sich insbesondere für Produktionsvorgänge, bei denen Meßwerte nur in einem sehr kleinen Meßwertbereich schwanken, und insbesondere in der Halbleiterfertigung und Feinwerktechnik.

Bei einer nicht dargestellten Ausführungsform der erfindungsgemäßen Signalvorverarbeitungsschaltung 9 weist diese eine Vielzahl von Analog/Digital-Wandlern 20 zum Anschluß an eine Vielzahl von Sensoren 2 auf.

Bei einer bevorzugten Ausführungsform ist die Signalvorverarbeitungsschaltung ein tragbares Gerät mit eigener Stromversorgung.

Der über die Eingabevorrichtung 30 eingegebene Referenzmeßwert U_{ref} sowie der Dehnungsfaktor K können sich bei einer Ausführungsform der erfindungsgemäßen Vorrichtung entsprechend einem durch den Anwender vorgegebenen Programm ändern. Bei dieser Ausführungsform sind eine Vielzahl von Referenzmeßwerten sowie Dehnungsfaktoren tabellenförmig in einem nicht dargestellten Speicher abgespeichert und werden über die Schnittstelle 28 eingelesen. Dadurch ist es möglich, die Meßwertbereiche sowie deren Auflösung angepaßt an den Ablauf eines Produktionsvorganges vorzuprogrammieren.

## Patentansprüche

1. Vorrichtung zur Meßsignalvorverarbeitung für eine speicherprogrammierte Steuerung (SPS) mit:
mindestens einem Analog/Digital-Wandler (20), der an einen Meßverstärker (8) eines Meßwertaufnehmers (2) mit einem vorbestimmten Meßwertbereich und einer vorbestimmten Empfindlichkeit anschließbar ist und das erfaßte analoge Meßsignal in ein digitales Meßsignal umwandelt,
einem Festwertspeicher (21), in dem ein Referenzmeßwert U_{ref}, welcher innerhalb des vorbestimmten Meßwertbereichs des Meßwertaufnehmers (2) liegt, und ein Dehnungsfaktor K digital abspeicherbar sind,
einem Mikrocomputer (22), der ein digitales Differenzsignal zwischen dem digitalen Meßsignal und dem abgespeicherten Referenzmeßwert bildet und dieses digitale Differenzsignal mit dem abgespeicherten Dehnungsfaktor K multipliziert und als digitales Ausgangsmeßsignal an einen Analog/Digital-Wandler (23) abgibt, der das digitale Ausgangsmeßsignal in ein analoges Ausgangsmeßsignal umwandelt,
wobei das analoge Ausgangsmeßsignal eine höhere Empfindlichkeit aufweist als das von dem Meßwertaufnehmer (2) abgegebene Meßsignal und durch die speicherprogrammierbare Steuerung (SPS) weiterverarbeitbar ist.

2. Vorrichtung nach Anspruch 1,
**dadurch gekennzeichnet,**
daß der Festwertspeicher (21) ein nicht flüchtiger, programmierbarer Festwertspeicher ist.

3. Vorrichtung nach Anspruch 1 oder 2,
**dadurch gekennzeichnet,**
daß der Referenzmeßwert U_{ref} und der Dehnungsfaktor K über eine Schnittstelle (28) in den Mikrocomputer (22) eingebbar und in dem Festwertspeicher (21) abspeicherbar sind.

4. Vorrichtung nach einem der vorangehenden Ansprüche,
**dadurch gekennzeichnet,**
daß der Mikroprozessor (22) an eine Schnittstelle (28) angeschlossen ist, über die die Vorrichtung zur Meßsignalvorverarbeitung an eine Eingabevorrichtung (30) anschließbar ist.

5. Vorrichtung nach einem der vorangehenden Ansprüche,
**dadurch gekennzeichnet,**
daß der Analog/Digital-Wandler (23) an eine Standardübertragungsstrecke für SPS-programmierbare Steuerungen anschließbar ist.

6. Vorrichtung nach einem der vorangehenden Ansprüche,
**dadurch gekennzeichnet,**
daß die Signalvorverarbeitungsschaltung (9) über die Eingabevorrichtung (30) durch einen Anwender programmierbar ist.

7. Verfahren zur Meßwertsignalvorverarbeitung für eine speicherprogrammierbare Steuerung (SPS) mit den folgenden Schritten:
(a) Erfassen eines physikalischen Meßparameters durch einen Meßwertaufnehmer (2) mit einem vorbestimmten Meßwertbereich, wobei der Meßwertaufnehmer ein analoges Meßsignal mit einer vorbestimmten Empfindlichkeit abgibt, das verstärkt wird,
(b) Umwandeln des verstärkten, von dem Meßwertaufnehmer abgegebenen analogen Meßsignals in ein digitales Meßsignal mittels eines Analog/Digital-Wandlers (20),
(c) Berechnen eines digitalen Differenzsignales zwischen dem digitalen Meßsignal und einem abgespeicherten Referenzmeßwert, welcher innerhalb des vorbestimmten Meßwertbereichs des Meßwertaufnehmers (2) liegt, mittels eines Mikrocomputers (22),
(d) Berechnen eines digitalen Ausgangsmeßsignals durch Multiplikation des berechneten Differenzsignals mit einem abgespeicherten Dehnungsfaktor K, mittels des Mikrocomputers (22),
(e) Umwandeln des digitalen Ausgangsmeßsignals in ein analoges Ausgangsmeßsignal mittels eines Analog/Digital-Wandlers (23),
wobei das Ausgangsmeßsignal eine höhere Empfindlichkeit als das von dem Meßwertaufnehmer (2) abgegebene Meßsignal aufweist und das Ausgangsmeßsignal durch eine speicherprogrammierbare Steuerung (SPS) weiterverarbeitbar ist.

8. Verfahren nach Anspruch 7,
**dadurch gekennzeichnet,**
daß der Referenzmeßwert U_{ref} und/oder der Dehnungsfaktor K über eine Schnittstelle (28) in den Mikrocomputer (22) eingegeben und in einem programmierbaren Festwertspeicher (21) abgespeichert werden.

9. Verfahren nach Anspruch 7 oder 8,
**dadurch gekennzeichnet,**
daß der Meßwertaufnehmer (2) ein Temperaturmeßwertaufnehmer, insbesondere eine Temperaturmeßbrücke ist.
